# EUROPÄISCHE PATENTSCHRIFT

(11) **EP 2 897 262 B1**
(45) Veröffentlichungstag und Bekanntmachung des Hinweises auf die Patenterteilung: **09.10.2019**
(21) Anmeldenummer: 15155124.9
(22) Anmeldetag: 24.08.2012
(51) Int. Cl.: H02K 9/06, H02K 1/22, H02K 3/52, H02K 9/00, H02K 5/10, H02K 11/33, H02K 11/00

(54) **Atmender Elektromotor**
Breathing electric motor
Moteur électrique respirant

(30) Priorität: 12.09.2011 DE 102011115455
(43) Veröffentlichungstag der Anmeldung: 22.07.2015
(62) Teilanmeldung aus: 12761891.6
(73) Patentinhaber: Brose Fahrzeugteile GmbH & Co. Kommanditgesellschaft, Würzburg, 97076 Würzburg (DE)
(72) Erfinder: Hillenbrand, Tobias, 97332 Volkach (DE)
(74) Vertreter: FDST Patentanwälte

(56) Entgegenhaltungen:
- JP-A- H02 219 447
- JP-A- 2008 115 790
- US-A1- 2006 181 162

## Beschreibung

Die Erfindung bezieht sich auf einen Elektromotor, insbesondere einen eigengekühlten bürstenlosen Elektromotor.

Ein Elektromotor umfasst gewöhnlicherweise einen gegenüber einem feststehenden Stator (oder Ständer) drehbar gelagerten Rotor (oder Läufer). Bei einem bürstenlosen Elektromotor ist häufig der Stator mit einer Drehfeldwicklung bestückt, mittels der - durch Beaufschlagung der Drehfeldwicklung mit einem Wechselstrom - ein magnetisches Drehfeld erzeugt wird. Der oft innerhalb des Stators angeordnete Rotor ist in einer üblichen Bauform mit Permanentmagneten bestückt, die ein mit dem Drehfeld des Stators wechselwirkendes Erregerfeld erzeugen.

Bei einem bürstenlosen Elektromotor wird der zur Speisung der Statorwicklung vorgesehene Wechselstrom üblicherweise durch eine Umrichterelektronik (nachfolgend auch kurz: Umrichter) erzeugt. Bei kleineren Elektromotoren ist dieser Umrichter zusammen mit einer zugeordneten Steuerelektronik häufig in ein Elektronikfach aufgenommen, das im Motorgehäuse integriert ist.

Im Betrieb eines solchen Elektromotors fällt aufgrund von Schaltverlusten in dem Umrichter in erheblichem Umfang Wärme an. Zusätzliche Wärme entsteht im Inneren des Motors aufgrund von elektrischen Verlusten, insbesondere infolge von induzierten Kreisströmen sowie durch mechanische Reibung. Diese Wärmeentwicklung führt zu einer starken Erhitzung des Elektromotors. Um eine Überhitzung des Motors zu vermeiden, sind kleinere Elektromotoren häufig mit einer Eigenkühlung versehen, bei der der Elektromotor durch einen von dem Motor selbst erzeugten Luftstrom gekühlt wird. Ein solcher Elektromotor ist derart gestaltet, dass der Rotor entweder einen Motorlüfter antreibt oder - infolge entsprechender konstruktiver Ausgestaltung - selbst den Luftstrom erzeugt. Letzteres ist beispielsweise aus JP 02 219 447 A bekannt. JP 02 219 447 A offenbart dabei einen Elektromotor mit einem gegenüber einem Stator drehbar gelagerten Rotor, wobei auf einem ersten Teilsegment einer Stirnfläche des Rotors eine erste Luftleitkontur ausgebildet ist, die bei Drehung des Rotors in einer Referenzdrehrichtung einen nach außen gerichteten Luftstrom erzeugt, und wobei auf einem zweiten Teilsegment derselben Stirnfläche eine zweite Luftleitkontur ausgebildet ist, die bei Drehung des Rotors in der Referenzdrehrichtung einen nach innen gerichteten Luftstrom erzeugt, wobei bei der Drehung des Rotors an jedem feststehenden Punkt in der Peripherie der Stirnfläche mit dem abwechselnden Vorbeistreichen des ersten Teilsegments und des zweiten Teilsegments der von den Luftleitkonturen verursachte Luftstrom ständig seine Richtung wechselt.

Nachteiligerweise ist die Kühlleistung eines solchen eigengekühlten Elektromotors oft stark von der Drehrichtung des Rotors abhängig. Dies führt dazu, dass für Anwendungen mit verschiedener Hauptdrehrichtung regelmäßig unterschiedliche Motortypen entwickelt und hergestellt werden, was zu vergleichsweise hohen Entwicklungs-, Herstellungs- und Lagerkosten führt.

Zudem weisen herkömmliche Elektromotoren mit Eigenkühlung häufig eine vergleichsweise schlechte und ungleichmäßige Kühlleistung auf, was zu einer lokalen Überhitzung und entsprechend einer geringen Belastbarkeit des Elektromotors führen kann.

Der Erfindung liegt die Aufgabe zugrunde, mit einfachen Mitteln einen Elektromotor mit effizienter Eigenkühlung anzugeben.

Diese Aufgabe wird erfindungsgemäß gelöst durch die Merkmale des Anspruchs 1. Vorteilhafte Ausführungsformen und Weiterentwicklungen der Erfindung sind in den Unteransprüchen dargelegt.

Erfindungsgemäß umfasst der Elektromotor einen gegenüber einem Stator drehbar gelagerten Rotor. An zumindest einer der Stirnflächen des Rotors sind Luftleitkonturen ausgebildet, die bei drehendem Rotor zur Kühlung des Elektromotors einen Luftstrom erzeugen. Als Stirnflächen werden dabei diejenigen Flächen des Rotors bezeichnet, die quer zur Motorachse (d.h. der Rotationsachse des Rotors) ausgerichtet sind.

Erfindungsgemäß ist nun die die Luftleitkonturen tragende Stirnfläche in mindestens zwei Teilsegmente geteilt, wobei auf dem ersten Teilsegment der Stirnfläche eine erste Luftleitkontur, und auf dem zweiten Teilsegment der Stirnfläche eine zweite Luftleitkontur ausgebildet ist. Die erste Luftleitkontur ist hierbei derart ausgebildet, dass sie bei Drehung des Rotors in einer Referenzdrehrichtung einen nach außen gerichteten Luftstrom erzeugt, während die zweite Luftleitkontur derart ausgebildet ist, dass sie bei der Drehung des Rotors in der Referenzdrehrichtung einen nach innen gerichteten Luftstrom erzeugt.

Da bei der Drehung des Rotors an jedem feststehenden Punkt in der Peripherie der Stirnfläche abwechselnd das erste Teilsegment und das zweite Teilsegment vorbeistreichen, wechselt auch die von den Luftleitkonturen verursachte Luftströmung ständig ihre Richtung. Aus Sicht eines feststehenden (also nicht rotierenden) Beobachters wird somit durch den Rotor ein oszillierender, radialer Luftstrom erzeugt, der einem Atmungsvorgang ähnelt.

Infolge der fortwährenden Richtungsänderung der Luftströmung wird einerseits eine besonders gute Verwirbelung der im Motorinneren enthaltenen Luft erzielt, was der Ausbildung von starken Temperaturgradienten im Rotorinneren, insbesondere der Ausbildung von lokalen Überhitzungszonen, effizient entgegenwirkt. Infolge der oszillierenden Radialströmung werden desweiteren kurze Strömungswege geschaffen, die eine besonders effiziente Wärmeabfuhr aus dem Motorinneren ermöglichen.

Durch die abwechselnde Anordnung von zueinander entgegengesetzt wirkenden Luftleitkonturen auf der Stirnfläche des Rotors wird zudem ein Elektromotor mit hoher Drehrichtungsinvarianz hinsichtlich der Kühlleistung geschaffen. Mit anderen Worten wird der Motor sowohl bei Rotordrehung in der Referenzdrehrichtung als auch bei Rotordrehung entgegen der Referenzdrehrichtung in gleich oder zumindest ähnlich effizienter Weise gekühlt, zumal sich die Wirkung der Luftleitkonturen bei Umkehrung der Drehrichtung ebenfalls umkehrt. Die Luftleitkontur des ersten Teilsegments, die bei der Rotordrehung in Referenzdrehrichtung einen nach außen gerichteten Luftstrom erzeugt, erzeugt somit bei Rotordrehung entgegen der Referenzdrehrichtung einen nach innen gerichteten Luftstrom. Ebenso erzeugt auch die Luftleitkontur des zweiten Teilsegments der Stirnfläche, die bei Rotordrehung in Referenzdrehrichtung einen nach innen gerichteten Luftstrom erzeugt, bei Rotordrehung entgegen der Referenzdrehrichtung einen nach außen gerichteten Luftstrom. Die Luftleitkonturen tauschen somit bei einem Wechsel der Rotordrehrichtung lediglich ihre Aufgabe beziehungsweise Wirkung, wohingegen das auf der Erzeugung einer oszillierenden Radialströmung beruhende Kühlprinzip von der Drehrichtung des Rotors unbeeinflusst ist. Die vorstehend eingeführte "Referenzdrehrichtung" ist daher bei dem erfindungsgemäßen Elektromotor frei definierbar. Sie wird hier und im Folgenden lediglich als Bezugsgröße verwendet, um die Wirkung der ersten und zweiten Luftleitkontur präzise in Relation miteinander setzen zu können.

Im Rahmen der Erfindung kann die die Luftleitkonturen tragende Stirnfläche des Rotors grundsätzlich in beliebige viele "erste" und "zweite" Teilsegmente mit jeweils darauf angeordneten "ersten" bzw. "zweiten" Luftleitkonturen aufgeteilt sein, wobei "erste" und "zweite" Teilsegmente um den Umfang der Stirnfläche alternierend angeordnet sind. Um - insbesondere bei einem vergleichsweise kleinem und schnell drehenden Elektromotor - einen möglichst hohen Luftumsatz zu erzielen, ist die Stirnfläche vorzugsweise aber in lediglich zwei Teilsegmente, nämlich genau ein erstes Teilsegment und genau ein zweites Teilsegment aufgeteilt. Die beiden Teilsegmente werden dabei vorzugsweise durch zwei gleich große (halbkreisförmige) Halbsegmente der Stirnfläche gebildet, die entlang einer Radiallinie unmittelbar zusammenstoßen.

Um eine ganz oder zumindest nahezu vollständige Drehrichtungsinvarianz des Elektromotors zu erreichen, ist die erste Luftleitkontur vorzugsweise spiegelsymmetrisch zu der zweiten Luftleitkontur ausgebildet. Bei der Spiegelebene handelt es sich hierbei insbesondere um eine Axial-Radial-Ebene, die von der Richtung der Motorachse und einer das erste und zweite Teilsegment trennenden Radiallinie des Rotors aufgespannt wird.

In einer vorteilhaften Ausführungsform der Erfindung sind die erste Luftleitkontur und die zweite Luftleitkontur jeweils durch eine Anzahl von länglichen Stegen gebildet. Diese Stege stehen hierbei von der Stirnfläche des Rotors in Axialrichtung ab und erstrecken sich (hinsichtlich ihrer Längserstreckung) jeweils schräg zu der lokalen Radiale der Stirnfläche, d.h. zu der Radialrichtung der Stirnfläche am Ort des jeweiligen Stegs. Die Stege wirken aufgrund dieser Orientierung quasi als Leitschaufeln, die bei Drehung des Rotors die umgebende Luft nach innen oder außen auslenken. Die Formulierung "eine Anzahl von Stegen" ist hierbei dahingehend zu verstehen, dass die erste Luftleitkontur und/oder die zweite Luftleitkontur im Extremfall auch lediglich aus jeweils einem einzigen Steg bestehen kann, dass im Regelfall aber jede der beiden Luftleitkonturen jeweils aus einer Mehrheit von Stegen gebildet ist.

Sofern die erste und/oder zweite Luftleitkontur mehrere Stege umfasst, sind alle Stege der jeweiligen Luftleitkontur vorzugsweise in gleichem Maß gegenüber der jeweils lokalen Radialrichtung angestellt (d.h. schräg orientiert).

Zusätzlich zu den die Luftleitkonturen bildenden Stegen sind auf der Stirnfläche des Rotors vorzugsweise weitere Stege vorgesehen, die sich in radialer Richtung erstrecken. Solche Radialstege grenzen hierbei insbesondere die ersten und zweiten Teilsegmente der Stirnfläche voneinander ab. Des Weiteren ist vorzugsweise auch jedes dieser Teilsegmente durch mindestens einen weiteren Radialsteg (vorzugsweise aber jeweils drei weitere Radialstege) in mehrere Untersegmente aufgeteilt. In jedem der Untersegmente ist hierbei zweckmäßigerweise jeweils ein Steg der ersten Luftleitkontur bzw. der zweiten Luftleitkontur angeordnet. Die Radialstege fördern eine Tangentialkomponente des vom Rotor erzeugten Luftstroms und verstärken somit die durch die Luftleitkonturen verursachte Luftverwirbelung. Ferner bewirken sie eine mechanische Versteifung des Rotors.

Für eine effiziente Kanalisierung des vom Rotor erzeugten Luftstroms ist erfindungsgemäß auf einer Gegenfläche eines (Motor-) Gehäuseteils eine Gegen-Luftleitkontur ausgebildet. Als "Gegenfläche" ist hierbei diejenige Fläche des Gehäuseteils bezeichnet, die der die Luftleitkonturen tragenden Stirnfläche des Rotors unmittelbar gegenüberliegt. Die Gegen-Luftleitkontur ist durch eine Anzahl von - überwiegend zumindest näherungsweise in Radialrichtung verlaufenden - Stegen mit dazwischen angeordneten Nuten gebildet. Jede Nut endet hier am Umfang der Gegenfläche in einer Belüftungsöffnung, durch die das Motorinnere fluidisch mit der Außenwelt verbunden ist.

In das an die Stirnfläche angrenzende Gehäuseteil ist insbesondere ein Elektronikfach zur Aufnahme einer Umrichterelektronik für die Speisung des Elektromotors eingebracht.

Der erfindungsgemäße Elektromotor ist vorzugsweise als Innenrotormotor (oder Innenläufermotor) ausgebildet und wird in der bevorzugten Anwendung insbesondere als Lüftermotor zum Antrieb eines Kühlerlüfters in einem Kraftfahrzeug eingesetzt.

Nachfolgend wird ein Ausführungsbeispiel der Erfindung anhand einer Zeichnung näher erläutert. Darin zeigen:
- Fig. 1: in einer Explosionsdarstellung einen Kühlerlüfter für ein Kraftfahrzeug mit einem eigengekühlten, bürstenlosen Innenrotormotor mit integrierter Umrichterelektronik,
- Fig. 2: in perspektivischer Darstellung mit Blick auf eine Vorderseite den zusammengesetzten Motor gemäß Fig. 1,
- Fig. 3: in perspektivischer Darstellung mit Blick auf eine Rückseite den zusammengesetzten Motor gemäß Fig. 1,
- Fig. 4: in perspektivischer Darstellung mit Blick auf eine Rückseite einen Stator sowie einen darin einliegenden Rotor des Motors gemäß Fig. 1,
- Fig. 5: in Draufsicht auf die Rückseite den Stator und den darin einliegenden Rotor des Motors gemäß Fig. 1,
- Fig. 6: in perspektivischer Darstellung mit Blick auf eine Vorderseite einen Motorträger des Motors gemäß Fig. 1,
- Fig. 7: in perspektivischer Darstellung mit Blick auf eine Rückseite den Rotor des Motors gemäß Fig. 1,
- Fig. 8: in schematischer Darstellung die Wirkung des Rotors zur Eigenkühlung des Motors bei Rotordrehung in einer Referenzdrehrichtung, und
- Fig. 9: in Darstellung gemäß Fig. 8 die Wirkung des Rotors zur Eigenkühlung des Motors bei Rotordrehung entgegen der Referenzdrehrichtung.

Einander entsprechende Teile und Größen sind in allen Figuren stets mit gleichen Bezugszeichen versehen.

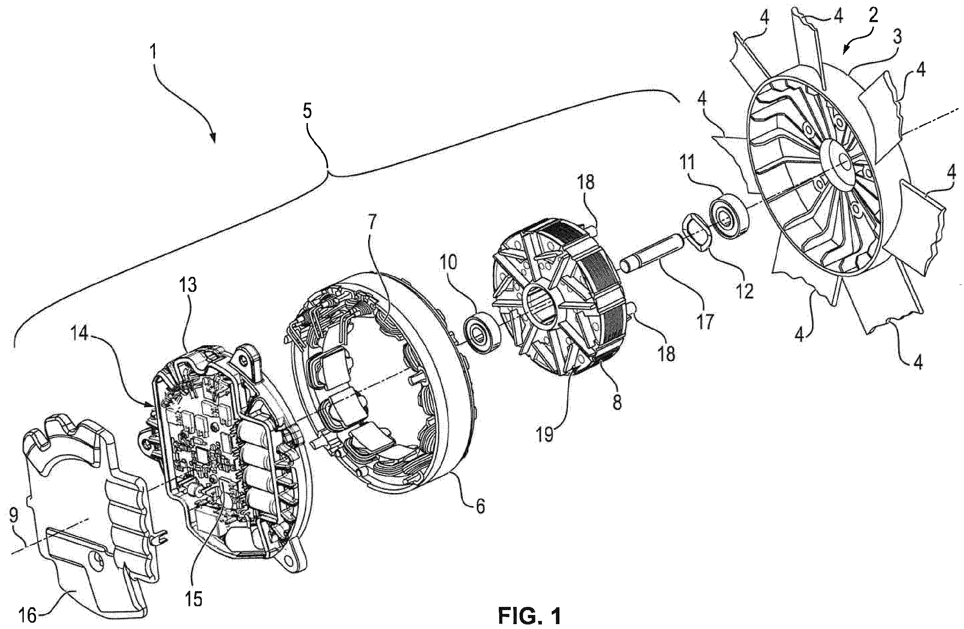

Fig. 1 zeigt in auseinandergenommenem Zustand einen Lüfter 1 für den Kühler eines Kraftfahrzeugs. Der Lüfter 1 umfasst ein Lüfterrad 2 mit einer zentralen Kappe 3, um deren Außenumfang herum sieben (nur ansatzweise dargestellte) Luftleitschaufeln 4 gleichverteilt angeordnet sind. Der Lüfter 1 umfasst des Weiteren einen (Lüfter-)Motor 5, mittels welchem das Lüfterrad 2 drehangetrieben ist.

Der Motor 5 umfasst einen - vereinfacht hohlzylindrischen - Stator 6, der mit einer dreiphasigen Drehfeldwicklung 7 bewickelt ist. Der Motor 5 umfasst des Weiteren einen - vereinfacht kreisscheibenförmigen - permanenterregten Rotor 8, der im Inneren des Stators 6 um eine Motorachse 9 drehbar gelagert ist. Zur Lagerung des Rotors 8 umfasst der Motor 5 zwei Wälzlager 10 und 11, die von axial entgegengesetzten Seiten an dem Rotor 8 angreifen. Das Axialspiel des Rotors 8 zwischen den beiden Wälzlagern 10 und 11 ist hierbei durch einen Federring 12 angefedert.

Der Motor 5 umfasst des Weiteren einen - grob vereinfacht - scheibenförmigen Motorträger 13. An einer von dem Lüfterrad 2 abgewandten Stirnseite ist in den Motorträger 13 ein Elektronikfach 14 eingebracht, in das eine Umrichterelektronik 15 eingesetzt ist. Zur dichten Verschließung des Elektronikfachs 14 umfasst der Motor 5 schließlich einen Elektronikfachdeckel 16.

Diejenige Seite des Lüfters 1, an der das Lüfterrad 2 angeordnet ist, ist ohne Rücksicht auf die Orientierung des Lüfters 1 im Raum als "vorne" oder "Vorderseite" bezeichnet. Die hiervon abgewandte Seite des Lüfters 1, die mit dem Elektronikfachdeckel 16 abgeschlossen ist, ist dagegen als "hinten" oder "Hinterseite" bezeichnet. Entsprechend werden die Begriffe "hinten" und "vorne" sowie "Hinterseite" und "Vorderseite" auch für die einzelnen Teile des Lüfters 1 verwendet, wobei diesbezüglich von der Orientierung dieser Teile in dem zusammengebauten Lüfter 1 ausgegangen wird.

Der Rotor 8 ist (in nicht näher dargestellter Weise) durch ein Blechpaket gebildet, in das Permanentmagneten zur Erzeugung eines Erregerfeldes eingesetzt sind, wobei das Blechpaket zusammen mit den eingesetzten Permanentmagneten mit einem Kunststoffmantel umspritzt ist. In ähnlicher Weise besteht auch der Stator 6 aus einem Blechpaket, das mit einem Kunststoffmantel umspritzt ist. Der Motorträger 13 ist im dargestellten Beispiel durch ein einstückiges Druckgussteil aus Aluminium gebildet. Bei dem Elektronikfachdeckel 16 handelt es sich vorzugsweise um ein Spritzgussteil aus Kunststoff.

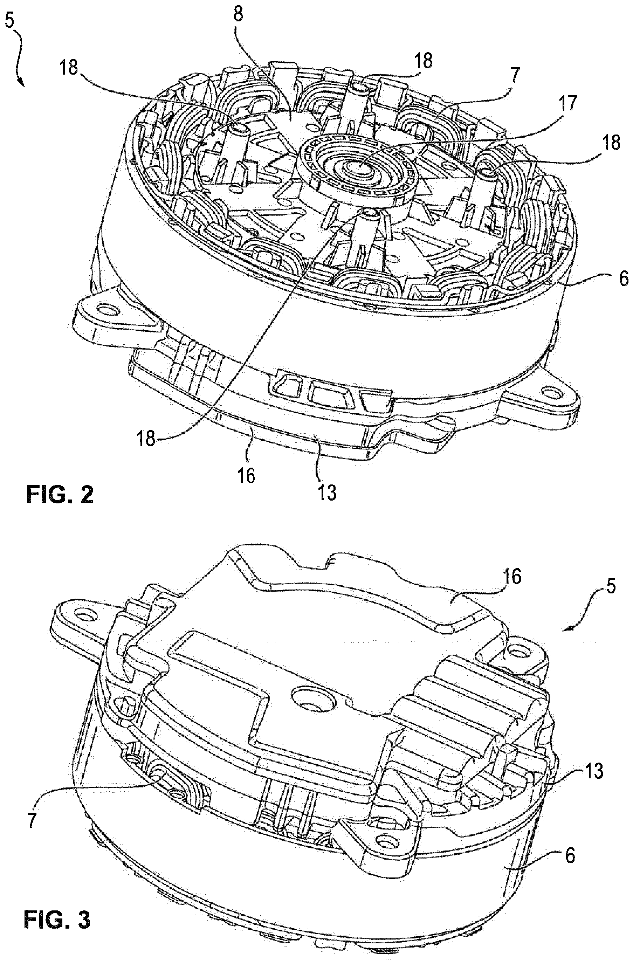

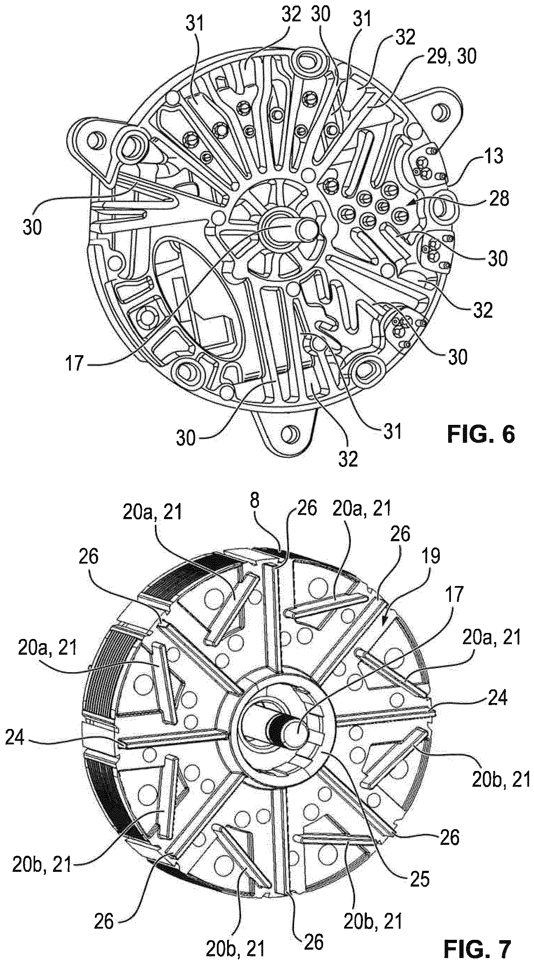

In dem aus den Fig. 2 und 3 ersichtlichen, zusammengebauten Zustand des Motors 5 ist der Stator 6 fest auf der Vorderseite des Motorträgers 13 aufgebracht. Der Rotor 8 ist in den Stator 6 eingesetzt. Der Motorträger 13 bildet somit zusammen mit dem Stator 6 ein Motorgehäuse, in dem der Rotor 8 aufgenommen ist. In eingebautem Zustand ist der Rotor 8 von beiden Axialseiten her von je einem der beiden Wälzlager 10 und 11 flankiert. Die Wälzlager 10 und 11 sind hierbei an einem Achsbolzen 17 gelagert, der seinerseits an dem Motorträger 13 befestigt ist (vergleiche Fig. 6). An seiner Vorderseite ist der Rotor 8 mit vier Schraubdomen 18 versehen, mittels welcher der Rotor 8 im Montagezustand mit dem Lüfterrad 2 verschraubt ist. Die Befestigung des Motors 5 und damit des gesamten Lüfters 1 an dem Fahrzeug erfolgt über den Motorträger 13, der hierfür mit drei von seinem Außenumfang abstehenden Schraublaschen versehen ist.

Bei dem Motor 5 handelt es sich um einen eigengekühlten Elektromotor. Besonderer Kühlbedarf besteht bei diesem Motor 5 insbesondere an der Vorderseite des Motorträgers 13, zumal über diese Vorderseite ein erheblicher Anteil der von der Umrichterelektronik 15 erzeugten Verlustwärme aus dem Elektronikfach 14 abgeführt wird.

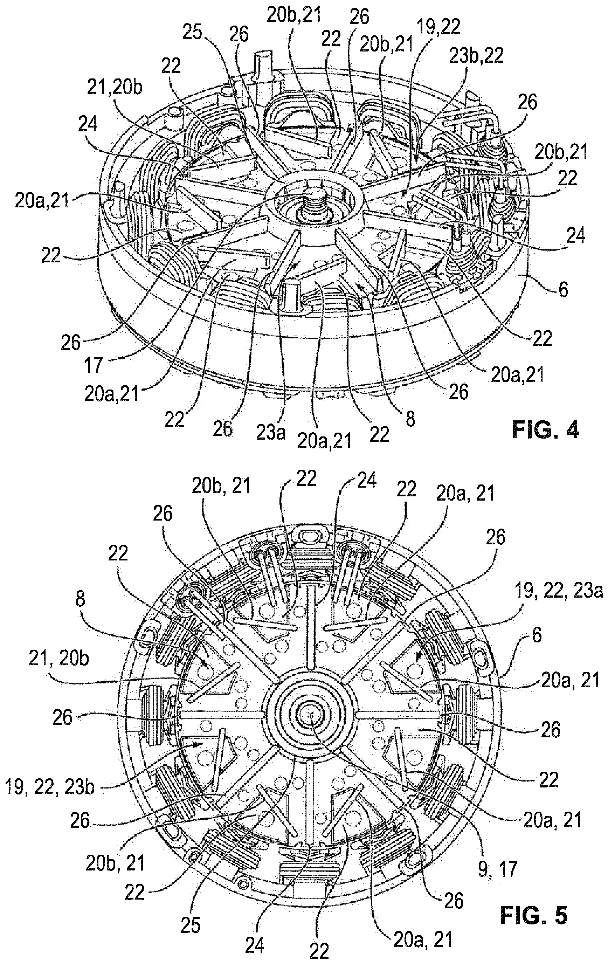

Um an dieser Stelle eine effiziente Kühlwirkung zu erzielen, sind an einer angrenzenden rückseitigen Stirnfläche 19 des Rotors 8 zwei Luftleitkonturen 20a und 20b aufgebracht, die insbesondere aus den Fig. 4 bis 9 ersichtlich sind. Jede der beiden Luftleitkonturen 20a und 20b besteht jeweils aus vier länglichen, geradlinigen Stegen 21, die aus dem Kunststoffmantel des Rotors 8 derart ausgeformt sind, dass sie von der Stirnfläche 19 des Rotors 8 in axialer Richtung zum Motorträger 13 hin abstehen.

Die insgesamt acht Stege 21 der Luftleitkonturen 20a und 20b sind etwa gleichmäßig verteilt um den Umfang der Stirnfläche 19 herum angeordnet. Jeder Steg 21 ist somit innerhalb eines Untersegments 22 der kreisscheibenförmigen Stirnfläche 19 angeordnet, das einer Achtel- oder 45°-Kreisfläche entspricht. Die vier Stege 21 der Luftleitkontur 20a sind hierbei in vier unmittelbar benachbarten Untersegmenten 22 angeordnet, so dass sich die gesamte Luftleitkontur 20a über ein Halbsegment 23a (oder 180°-Segment) der Stirnfläche 19 erstreckt. Ebenso sind auch die vier Stege 21 der Luftleitkontur 20b in vier unmittelbar aneinander grenzenden Untersegmenten 22 angeordnet, so dass die gesamte Luftleitkontur 20b das verbleibende zweite Halbsegment 23b der Stirnfläche 19 einnimmt. Die beiden Halbsegmente 23a und 23b der Stirnfläche 19 sind hierbei durch zwei Radialstege 24 voneinander abgegrenzt, die als axiale Vorsprünge aus dem Kunststoffmantel des Rotors 8 ausgeformt sind, und die sich ausgehend von einem zentralen Kreissteg 25 diametral zueinander nach außen erstrecken. Durch jeweils drei weitere Radialstege 26 gleicher Art sind des Weiteren auch die Untersegmente 22 jedes Halbsegments 23a, 23b voneinander getrennt. Die Radialstege 24 und 26 bilden somit zusammen mit dem Kreissteg 25 eine stern- oder sonnenförmige Struktur. Jeder Steg 21 ist zudem zu drei Seiten von zwei Radialstegen 26 bzw. 24 und 26 und dem Kreissteg 25 umgeben.

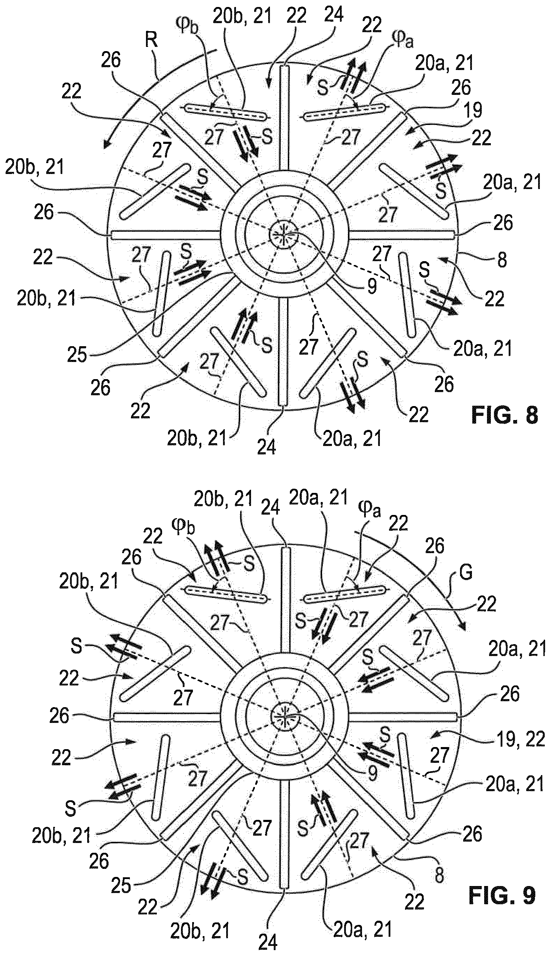

Die vier Stege 21 der Luftleitkontur 20a sind stets schräg (d.h. unter einem spitzen Anstellwinkel (ϕₐ) gegenüber derjenigen Radiale 27 (Fig. 8) angestellt, die die Winkelhalbierende des jeweils zugehörigen Untersegments 22 bildet und somit den jeweiligen Steg 21 näherungsweise mittig schneidet. Ebenso sind auch die vier Stege 21 der Luftleitkontur 20b stets schräg, nämlich unter einem spitzen Anstellwinkel ϕ_{b}, gegenüber der die Winkelhalbierende des jeweils zugehörigen Untersegments 22 bildenden Radiale 27 angestellt.

Die Anstellwinkel ϕₐ bzw. ϕ_{b} sind dabei vom Absolutbetrag her gleich. Jedoch unterscheiden sich die Stege 21 der Luftleitkontur 20a von den Stegen 21 der Luftleitkontur 20b hinsichtlich der Anstellrichtung. Während nämlich die Stege 21 der Luftleitkontur 20a gegenüber der jeweils zugeordneten Radiale 27 im Uhrzeigersinn ausgelenkt sind, sind die Stege 21 der Luftleitkontur 20b bezüglich der jeweils zugehörigen Radiale 27 im Gegen-Uhrzeigersinn ausgerichtet. Entsprechend hat der Anstellwinkel ϕₐ einen negativen Betrag, während der Anstellwinkel ϕ_{b} einen positiven Betrag aufweist. Infolge der gegensinnig-gleichen Anstellung der jeweiligen Stege 21 bilden die Luftleitkonturen 20a und 20b zusammen ein Muster, das bezüglich der durch die Radialstege 24, und somit durch die Trennline der Halbsegmente 23a und 23b definierten Axial-Radial-Ebene spiegelsymmetrisch ist.

Der Absolutbetrag des Anstellwinkels ϕₐ bzw. ϕ_{b} kann geeigneterweise etwa zwischen 40° und 80° gewählt werden. Für den in den Figuren dargestellten Lüftermotor 5 hat sich für eine effiziente Kühlung die Dimensionierung ϕₐ = -60° und ϕ_{b} = +60° als besonders vorteilhaft erwiesen.

Die Vorderseite des Motorträgers 13 liegt im zusammengebauten Zustand des Motors 5 der Stirnfläche 19 des Rotors 8 unmittelbar gegenüber und bildet somit eine Gegenfläche 28 (Fig. 6) zur dieser Stirnfläche 19. Korrespondierend mit den Luftleitkonturen 20a, 20b ist an dieser Gegenfläche 28 eine Gegen-Luftleitkontur 29 ausgeformt, die aus einer Mehrzahl von - zumindest in grober Näherung radial verlaufenden - Stegen 30 und dazwischen ausgeformten Nuten 31 gebildet ist. Zumindest der überwiegende Anteil der Nuten 31 mündet hierbei am Umfang des Motorträgers 13 in jeweils mindestens einer Belüftungsöffnung 32, über die im Montagezustand des Motors 5 der vom Stator 6 umschlossene Innenraum mit der Umgebung fluidisch verbunden ist. Die Nuten 31 wirken hierdurch als Luftkanäle, die einen gezielten Luftaustausch zwischen dem Motorinnenraum und der Umgebung ermöglichen.

Die Luftleitkonturen 20a, 20b des Rotors 8 fördern im Betrieb des Motors 5 diesen Luftaustausch effizient, indem sie infolge ihrer schrägen Anstellung bei einer Rotation des Rotors 8 eine radiale, jedoch für die beiden Luftleitkonturen 20a, 20b stets gegensätzlich gerichtete Luftströmung S (Fig. 8) erzeugen. So wird bei Drehung des Rotors 8 in einer Referenzdrehrichtung R (hier als Drehung des von hinten betrachteten Rotors 8 im Gegen-Uhrzeigersinn definiert) von den Stegen 21 der Luftleitkontur 20a die Luftströmung S in radial auswärtiger Richtung erzeugt, während die Luftströmung S durch die Stege 21 der Luftleitkontur 20b in radial einwärtiger Richtung erzeugt wird.

An jeder Belüftungsöffnung 32 des Motorträgers 13 wird somit durch den rotierenden Rotor 8 eine oszillierende Luftströmung erzeugt, indem bei jeder ersten Halbdrehung des Rotors 8 Luft durch die jeweilige Belüftungsöffnung 32 ausgestoßen wird, während bei jeder zweiten Halbdrehung des Rotors 8 durch dieselbe Belüftungsöffnung 32 Luft eingesogen wird. Im übertragenen Sinn vollzieht der Motor 5 somit einen "Atemprozess", der eine effiziente Wärmeabfuhr aus dem Motorinnenraum und somit eine effiziente Kühlung des Motorträgers 13 bewirkt.

Bei Drehung des Rotors 8 in einer zur Referenzdrehrichtung R entgegengesetzten Gegenrichtung G kehren sich gemäß Fig. 9 die Strömungsverhältnisse um. Über eine Volldrehung des Rotors 8 betrachtet, bleibt die oszillierende Luftströmung aufgrund der spiegelsymmetrischen Ausgestaltung der Luftleitkonturen 20a, 20b aber völlig unbeeinflusst von der Drehrichtungsumkehr. Der Motor 5 entfaltet hierdurch in beiden Drehrichtungen eine gleich effiziente Kühlwirkung.

**Bezugszeichenliste**

| | | | |
|---|---|---|---|
| 1 | Lüfter | 32 | Belüftungsöffnung |
| 2 | Lüfterrad | | |
| 3 | Kappe | ϕₐ, ϕ_{b} | Anstellwinkel |
| 4 | Luftleitschaufel | G | Gegendrehrichtung |
| 5 | (Lüfter-)Motor | R | Referenzdrehrichtung |
| 6 | Stator | S | Luftströmung |
| 7 | Drehfeldwicklung | | |
| 8 | Rotor | | |
| 9 | Motorachse | | |
| 10 | Wälzlager | | |
| 11 | Wälzlager | | |
| 12 | Federring | | |
| 13 | Motorträger | | |
| 14 | Elektronikfach | | |
| 15 | Umrichterelektronik | | |
| 16 | Elektronikfachdeckel | | |
| 17 | Achsbolzen | | |
| 18 | Schraubdom | | |
| 19 | Stirnfläche | | |
| 20a, 20b | Luftleitkontur | | |
| 21 | Steg | | |
| 22 | Untersegment | | |
| 23a, 23b | Halbsegment | | |
| 24 | Radialsteg | | |
| 25 | Kreissteg | | |
| 26 | Radialsteg | | |
| 27 | Radiale | | |
| 28 | Gegenfläche | | |
| 29 | Gegen-Luftleitkontur | | |
| 30 | Steg | | |
| 31 | Nut | | |

## Patentansprüche

1. Elektromotor (5) mit einem gegenüber einem Stator (6) drehbar gelagerten Rotor (8), wobei auf einem ersten Teilsegment (23a) einer Stirnfläche (19) des Rotors (8) eine erste Luftleitkontur (20a) ausgebildet ist, die bei Drehung des Rotors (8) in einer Referenzdrehrichtung (R) einen nach außen gerichteten Luftstrom (S) erzeugt, und wobei auf einem zweiten Teilsegment (23b) derselben Stirnfläche (19) eine zweite Luftleitkontur (20b) ausgebildet ist, die bei Drehung des Rotors (8) in der Referenzdrehrichtung (R) einen nach innen gerichteten Luftstrom (S) erzeugt, und mit einem der Stirnfläche (19) des Rotors (8) gegenüberliegenden Gehäuseteil (13) eines Motorgehäuses, wobei an einer an die Stirnfläche (19) angrenzenden Gegenfläche (28) dieses Gehäuseteils (13) eine Gegen-Luftleitkontur (29) aus überwiegend zumindest näherungsweise in Radialrichtung verlaufenden Stegen (30) und dazwischenliegenden Nuten (31) ausgebildet ist, wobei jede Nut (31) am Umfang der Gegenfläche (28) in eine Belüftungsöffnung (32) mündet, durch die das Motorinnere fluidisch mit der Außenwelt verbunden ist, und wobei bei der Drehung des Rotors (8) an jedem feststehenden Punkt in der Peripherie der Stirnfläche (19) mit dem abwechselnden Vorbeistreichen des ersten Teilsegments (23a) und des zweiten Teilsegments (23b) der von den Luftleitkonturen (20a,20b) verursachte Luftstrom (S) ständig seine Richtung wechselt, wobei an jeder Belüftungsöffnung (32) durch den Rotor (8) eine oszillierende Luftströmung erzeugt wird.

2. Elektromotor (5) nach Anspruch 1,
wobei das erste Teilsegment (23a) und das zweite Teilsegment (23b) jeweils durch ein Halbsegment der Stirnfläche (19) gebildet sind.

3. Elektromotor (5) nach Anspruch 1 oder 2,
wobei die erste Luftleitkontur (20a) zu der zweiten Luftleitkontur (20b) spiegelsymmetrisch ausgebildet ist.

4. Elektromotor (5) nach einem der Ansprüche 1 bis 3,
wobei die erste Luftleitkontur (20a) und die zweite Luftleitkontur (20b) jeweils durch eine Anzahl von länglichen Stegen (21) gebildet sind, die von der Stirnfläche (19) in Axialrichtung abstehen und die sich jeweils schräg zu der lokalen Radiale (27) der Stirnfläche (8) erstrecken.

5. Elektromotor (5) nach Anspruch 4,
wobei die erste Luftleitkontur (20a) und/oder die zweite Luftleitkontur (20b) aus einer Mehrheit von Stegen (21) gebildet sind, und wobei alle Stege (21) der ersten Luftleitkontur (20a) bzw. alle Stege (21) der zweiten Luftleitkontur (20b) in gleichem Maß gegenüber der lokalen Radialen (27) angestellt sind.

6. Elektromotor (5) nach einem der Ansprüche 1 bis 5
wobei das erste Teilsegment (23a) und das zweite Teilsegment (23b) durch Radialstege (24,26) getrennt werden, die von der Stirnfläche (19) in Axialrichtung abstehen.

7. Elektromotor (5) nach Anspruch 6,
wobei das erste Teilsegment (23a) und das zweite Teilsegment (23b) jeweils durch mindestens einen weiteren Radialsteg (26), bevorzugt jeweils durch drei weitere Radialstege (26) in Untersegmente (22) geteilt sind.

8. Elektromotor (5) nach den Ansprüchen 4 und 6,
wobei in jedem Untersegment (22) des ersten Teilsegments (23a) und des zweiten Teilsegments (23b) jeweils ein Steg (21) der ersten Luftleitkontur (20a) bzw. der zweiten Luftleitkontur (20b) angeordnet ist.

9. Elektromotor (5) nach einem der Ansprüche 1 bis 8,
wobei in das an die Stirnfläche (19) angrenzende Gehäuseteil (13) ein Elektronikfach (14) zur Aufnahme einer Umrichterelektronik (15) eingebracht ist.

## Claims

1. Electric motor (5) comprising a rotor (8) which is mounted such that it can rotate in relation to a stator (6), wherein a first air-guiding contour (20a), which generates an outwardly directed air stream (S) when the rotor (8) rotates in a reference rotation direction (R), is formed on a first partial segment (23a) of an end face (19) of the rotor (8), and wherein a second air-guiding contour (20b), which generates an inwardly directed air stream (S) when the rotor (8) rotates in the reference rotation direction (R), is formed on a second partial segment (23b) of the same end face (19), having a housing part (13) of a motor housing, which housing part is situated opposite the end face (19) of the rotor (8), wherein a mating air-guiding contour (29) comprising webs (30) extending predominantly at least approximately in the radial direction and slots (31), which are situated between said webs, is formed on a mating face (28) of said housing part (13), which mating face adjoins the end face (19), wherein each slot (31) opens out into a ventilation opening (32) on the circumference of the mating surface (28), through which opening the motor interior is fluidically connected to the outside world, and wherein during rotation of the rotor (8), the air stream (S) which is produced by the air-guiding contours (20a, 20b) continuously changes its direction at each stationary point over the periphery of the end face (19) as the first partial segment (23a) and the second partial segment (23b) alternately pass by, wherein an oscillating air flow is produced by the rotor (8) at each ventilation opening (32).

2. Electric motor (5) according to Claim 1,
wherein the first partial segment (23a) and the second partial segment (23b) are each formed by a half-segment of the end face (19).

3. Electric motor (5) according to Claim 1 or 2, wherein the first air-guiding contour (20a) is designed with mirror-image symmetry in relation to the second air-guiding contour (20b).

4. Electric motor (5) according to one of Claims 1 to 3,
wherein the first air-guiding contour (20a) and the second air-guiding contour (20b) are each formed by a number of elongate webs (21) which project from the end face (19) in the axial direction and which in each case extend obliquely to the local radial (27) of the end face (8).

5. Electric motor (5) according to Claim 4,
wherein the first air-guiding contour (20a) and/or the second air-guiding contour (20b) are formed from a plurality of webs (21), and wherein all of the webs (21) of the first air-guiding contour (20a) and/or all of the webs (21) of the second air-guiding contour (20b) are set to the same degree in relation to the local radials (27).

6. Electric motor (5) according to one of Claims 1 to 5,
wherein the first partial segment (23a) and the second partial segment (23b) are separated by radial webs (24, 26) which project from the end face (19) in the axial direction.

7. Electric motor (5) according to Claim 6, wherein the first partial segment (23a) and the second partial segment (23b) are separated into subsegments (22) in each case by at least one further radial web (26), preferably in each case by three further radial webs (26) .

8. Electric motor (5) according to Claims 4 and 6,
wherein in each case one web (21) of the first air-guiding contour (20a) and, respectively, of the second air-guiding contour (20b) is arranged in each subsegment (22) of the first partial segment (23a) and of the second partial segment (23b).

9. Electric motor (5) according to one of Claims 1 to 8,
wherein an electronics compartment (14) for accommodating a converter electronics system (15) is made in the housing part (13) which adjoins the end face (19).

## Revendications

1. Moteur électrique (5) comportant un rotor (8) monté tournant par rapport à un stator (6), dans lequel un premier contour de guidage d'air (20a) est formé sur un premier segment partiel (23a) d'une face frontale (19) du rotor (8), lequel génère un flux d'air (S) dirigé vers l'extérieur lors de la rotation du rotor (8) dans un sens de rotation de référence (R), et dans lequel un second contour de guidage d'air (20b) est formé sur un second segment partiel (23b) de la même face frontale (19), lequel génère un flux d'air (S) dirigé vers l'intérieur lors de la rotation du rotor (8) dans le sens de rotation de référence (R), et comportant une partie de boîtier (13) d'un boîtier de moteur, qui est située en vis-à-vis de la face frontale (19) du rotor (8), dans lequel, sur une contre-surface (28) de ladite partie de boîtier (13) adjacente à la surface frontale (19), un contre-contour de guidage d'air (29) est formé à partir de nervures (30) s'étendant principalement au moins approximativement dans la direction radiale et de rainures (31) situées entre celles-ci, dans lequel chaque rainure (31) à la périphérie de la contre-surface (28) débouche dans une ouverture de ventilation (32) par laquelle l'intérieur du moteur est relié par fluide au monde extérieur, et dans lequel, lors de la rotation du rotor (8) en chaque point fixe de la périphérie de la face frontale (19), la direction du flux d'air (S) provoqué par les contours de guidage d'air (20a, 20b) varie continuellement du fait du passage alterné du premier sous-segment (23a) et du second sous-segment (23b), dans lequel un flux d'air oscillant est généré au niveau de chaque ouverture de ventilation (32) par le rotor (8).

2. Moteur électrique (5) selon la revendication 1, dans lequel le premier segment partiel (23a) et le second segment partiel (23b) sont respectivement formés par un demi-segment de la face frontale (19).

3. Moteur électrique (5) selon la revendication 1 ou 2, dans lequel le premier contour de guidage d'air (20a) est le symétrique en miroir du second contour de guidage d'air (20b).

4. Moteur électrique (5) selon l'une des revendications 1 à 3,
dans lequel le premier contour de guidage d'air (20a) et le second contour de guidage d'air (20b) sont respectivement formés par un certain nombre de nervures (21) allongées dépassant de la face frontale (19) dans la direction axiale et s'étendant respectivement en biais vers le rayon local (27) de la face frontale (8).

5. Moteur électrique (5) selon la revendication 4, dans lequel le premier contour de guidage d'air (20a) et/ou le second contour de guidage d'air (20b) sont formés d'une pluralité de bandes (21), et dans lequel toutes les nervures (21) du premier contour de guidage d'air (20a) ou toutes les nervures (21) du second contour de guidage d'air (20b) sont placées de manière également répartie par rapport aux rayons locaux (27).

6. Moteur électrique (5) selon l'une des revendications 1 à 5,
dans lequel le premier segment partiel (23a) et le second segment partiel (23b) sont séparés par des nervures radiales (24, 26) dépassant de la face frontale (19) dans la direction axiale.

7. Moteur électrique (5) selon la revendication 6, dans lequel le premier segment partiel (23a) et le second segment partiel (23b) sont respectivement divisés en sous-segments (22) par au moins une autre bande radiale (26), de préférence respectivement par trois autres bandes radiales (26).

8. Moteur électrique (5) selon les revendications 4 et 6,
**caractérisé en ce que** des nervures (21) du premier contour de guidage d'air (20a) et du second contour de guidage d'air (20b) sont respectivement disposées dans chaque sous-segment (22) du premier segment partiel (23a) et du second segment partiel (23b).

9. Moteur électrique (5) selon l'une des revendications 1 à 8,
dans lequel un compartiment électronique (14) destiné à recevoir une électronique de convertisseur (15) est introduit dans la partie de boîtier (13) qui est adjacente à la face frontale (19).
